# EUROPEAN PATENT APPLICATION

(11) **EP 4 365 121 A1**
(43) Date of publication of application: **08.05.2024**
(21) Application number: 22832552.8
(22) Date of filing: 31.03.2022
(51) Int. Cl.: B65H 75/28, C09J 7/38

(54) **ADHESIVE TAPE ROLL AND MANUFACTURING METHOD THEREFOR**

(30) Priority: 02.07.2021 JP 2021110885
(71) Applicant: Denka Company Limited, Tokyo 103-8338 (JP)
(72) Inventor: TATE, Yosuke, Tokyo 103-8338 (JP); SAWAMURA, Shota, Tokyo 103-8338 (JP); MIURA, Manabu, Tokyo 103-8338 (JP); YOSHIMURA, Daisuke, Tokyo 103-8338 (JP)
(74) Representative: Vossius & Partner Patentanwälte Rechtsanwälte mbB
(86) International application number: PCT/JP2022/016395
(87) International publication number: WO 2023/276391

(57) **Abstract**

An adhesive tape roll that suppresses the phenomenon in which the adhesive tape on the inner side of the roll protrudes outward over time, and that does not have wrinkles in the vicinity of the release layer, is provided. The adhesive tape roll is formed by winding an adhesive tape including a base material layer containing a polyvinyl chloride-based resin and a plasticizer, and an adhesive layer provided on the base material layer, with the adhesive layer facing inward in the longitudinal direction, wherein a release layer is laminated on the adhesive layer on a side opposite to the direction in which the adhesive tape is pulled, starting from a position a predetermined distance away from a tip in the longitudinal direction of the adhesive tape.

## Description

### TECHNICAL FIELD

The present invention relates to an adhesive tape roll and a manufacturing method therefor.

### BACKGROUND ART

As an adhesive tape, such as insulating tape, to be used in various electrical devices in automobiles, railways, aircraft, ships, houses, factories, and the like, an adhesive tape in which an adhesive is coated on a base material layer containing a polyvinyl chloride-based resin is used. The reason for this is that such an adhesive tape has an appropriate degree of flexibility and extensibility, excellent flame retardancy, mechanical strength, heat deformation resistance, electrical insulation properties, moldability, and the like, and is relatively inexpensive.

For example, Patent Literature 1 discloses an adhesive tape having a polyvinyl chloride film containing predetermined amounts of polyvinyl chloride, a phthalic acid ester plasticizer, a calcium-zinc composite stabilizer, and a fatty acid ester wax, and an adhesive laminated on one surface of the film.

### CITATION LIST

### PATENT LITERATURE

PTL 1: Japanese Patent Laid-Open No. 11-263952

### SUMMARY OF INVENTION

### TECHNICAL PROBLEM

Adhesive tape is usually sold as a roll by winding an adhesive tape with the adhesive layer facing inward in the longitudinal direction to form the roll. On the adhesive layer at the tip of the adhesive tape of the roll, a release layer such as peel paper is laminated so that a user can easily peel the adhesive tape during use.

However, when an adhesive tape including a base material layer containing a polyvinyl chloride-based resin and a plasticizer, and an adhesive layer, is wound into a roll with the adhesive layer facing inward in the longitudinal direction, a phenomenon in which the adhesive tape on the inner side of the roll protrudes outward may occur on the surface on the roll side over time due to residual stress (hereinafter also referred to as "protruding phenomenon"). To suppress this phenomenon, from the viewpoint of removing the residual stress, an annealing treatment (heat treatment) may be carried out on the roll. However, if an annealing treatment is carried out on the roll, the adhesive tape may shrink in the longitudinal direction, causing the adhesive tape to partially separate in the vicinity of the release layer, and wrinkles to occur.

An object of the present invention is to provide an adhesive tape roll that suppresses the phenomenon in which the adhesive tape on the inner side of the roll protrudes outward over time, and that does not have wrinkles in the vicinity of the release layer, and a manufacturing method therefor.

### SOLUTION TO PROBLEM

The present invention includes the following aspects.
[1] An adhesive tape roll formed by winding an adhesive tape, including a base material layer containing a polyvinyl chloride-based resin and a plasticizer, and an adhesive layer provided on the base material layer, with the adhesive layer facing inward in the longitudinal direction, wherein
   a release layer is laminated on the adhesive layer on a side opposite to the direction in which the adhesive tape is pulled, starting from a position a predetermined distance away from a tip in the longitudinal direction of the adhesive tape.
[2] The adhesive tape roll according to [1], wherein the release layer is laminated starting from a position 1 to 5 mm away from the tip in the longitudinal direction of the adhesive tape.
[3] The adhesive tape roll according to [1] or [2], wherein a length of the release layer in the longitudinal direction of the adhesive tape is from 5 to 20 mm.
[4] The adhesive tape roll according to any one of [1] to [3], wherein the release layer has a tensile modulus of from 10 to 300 MPa.
[5] The adhesive tape roll according to any one of [1] to [4], wherein the adhesive tape has a superposed adhesive strength of from 0.5 to 2.5 N/cm at 120°C.
[6] A method for manufacturing an adhesive tape roll including:
   a step of forming the roll by winding an adhesive tape including a base material layer containing a polyvinyl chloride-based resin and a plasticizer, and an adhesive layer provided on the base material layer, with the adhesive layer facing inward in the longitudinal direction of the adhesive tape;
   a step of laminating, starting from a position a predetermined distance away from a tip in the longitudinal direction of the adhesive tape, a release layer on the adhesive layer on a side opposite to the tip; and
   a step of heating the roll at from 100 to 130°C.

### ADVANTAGEOUS EFFECTS OF INVENTION

According to the present invention, an adhesive tape roll that suppresses the phenomenon in which the adhesive tape on the inner side of the roll protrudes outward over time, and that does not have wrinkles in the vicinity of the release layer, and a manufacturing method therefor, can be provided.

### BRIEF DESCRIPTION OF DRAWINGS

[Fig. 1] Fig. 1 is a schematic diagram showing an example of a conventional roll.
[Fig. 2] Fig. 2 is a schematic diagram showing an example of a roll according to the present invention.
[Fig. 3] Fig. 3 is a schematic diagram showing an example of a manufacturing method of a roll according to the present invention.

### DESCRIPTION OF EMBODIMENTS

### [Adhesive tape roll]

The adhesive tape roll according to the present invention is an adhesive tape roll formed by winding an adhesive tape including a base material layer containing a polyvinyl chloride-based resin and a plasticizer, and an adhesive layer provided on the base material layer, with the adhesive layer facing inward in the longitudinal direction. In the roll, a release layer is laminated on the adhesive layer on a side opposite to the direction in which the adhesive tape is pulled, starting from a position a predetermined distance away from a tip in the longitudinal direction of the adhesive tape. The release layer adheres to the adhesive layer, but not to the roll (i.e., the opposing base material layer), and is separable.

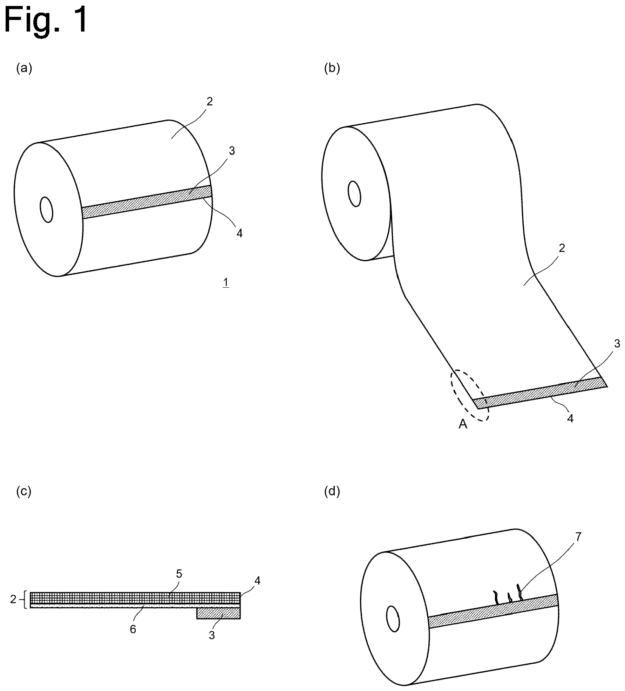

An example of a conventional roll is shown in Fig. 1. Fig. 1(a) is a perspective view showing a roll 1, Fig. 1(b) is a perspective view in which an adhesive tape 2 of the roll 1 in Fig. 1(a) is pulled, Fig. 1(c) is a side view from a portion A in Fig. 1(b), and Fig. 1(d) is a perspective view after the roll 1 of Fig. 1(a) is annealed. As shown in Fig. 1(a) to Fig. 1(c), the roll 1 is formed by winding an adhesive tape 2 having a base material layer 5 and an adhesive layer 6 laminated on the base material layer 5 with the adhesive layer 6 facing inward. A release layer 3 is provided at a tip 4 of the adhesive tape 2. The release layer 3 is provided at the tip 4 in the longitudinal direction of the adhesive tape 2, that is, at the end portion on the pulling side of the adhesive tape 2. Therefore, in the roll 1 of Fig. 1(a), the tip 4 in the longitudinal direction of the adhesive tape 2 is separated from the roll 1. The present inventors found that when the roll 1 of Fig. 1(a) is annealed to suppress the above-described protrusion phenomenon, the adhesive tape 2 shrinks in the longitudinal direction, which causes the adhesive tape 2 to partially separate from the boundary between the release portion where the release layer 3 is laminated and a non-laminated adhering portion toward the adhering portion, and wrinkles 7 to occur in the vicinity of the release layer 3, as shown in Fig. 1(d).

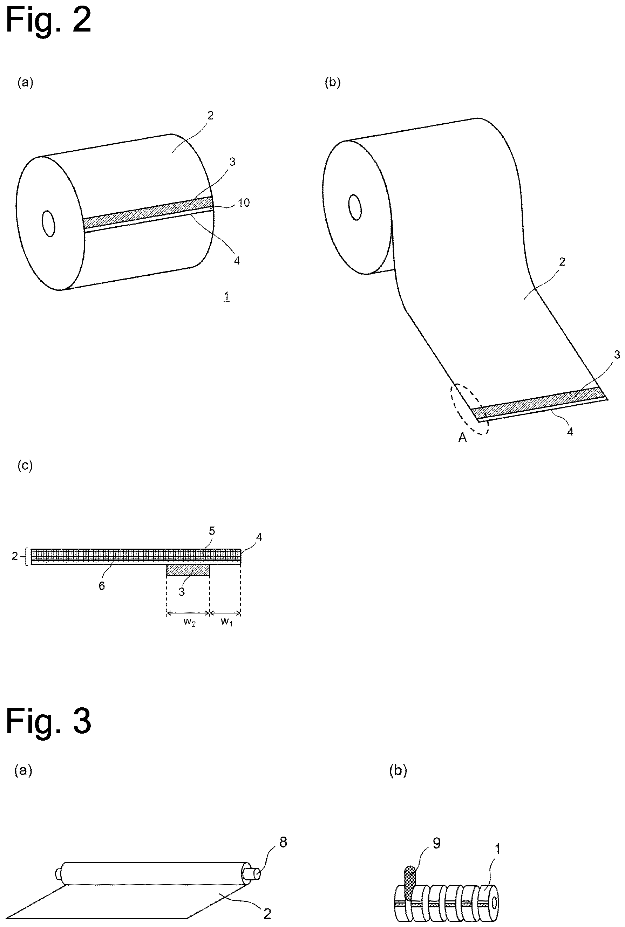

As a result of intensive studies to suppress the occurrence of wrinkles, the present inventors found that by providing the release layer on the side opposite to the direction in which the adhesive tape is pulled, starting from a position a predetermined distance away from a tip in the longitudinal direction of the adhesive tape, the occurrence of wrinkles can be suppressed even when annealing is performed. An example of the roll according to the present invention is shown in Fig. 2. Fig. 2(a) is a perspective view showing the roll 1, Fig. 2(b) is a perspective view in which the adhesive tape 2 of the roll 1 in Fig. 2(a) is pulled, and Fig. 2(c) is a side view from a portion A in Fig. 2(b). In the roll 1 shown in Fig. 2, the release layer 3 is provided on the side opposite to the direction in which the adhesive tape 2 is pulled, starting from a position a predetermined distance (w₁) away from the tip 4 in the longitudinal direction of the adhesive tape 2. That is, the release layer 3 is not provided at the tip 4 in the longitudinal direction of the adhesive tape 2, but the release layer 3 is provided from a position spaced apart from the tip 4 by a predetermined distance (w₁) toward the side (winding side) opposite to the direction in which the adhesive tape 2 is pulled. Therefore, as shown in Fig. 2(a), near the tip 4 in the longitudinal direction of the adhesive tape 2 of the roll 1, there is a tip adhering portion 10 having a predetermined width, and the tip 4 is adhered to the roll 1. As a result, even when the roll 1 is annealed and the adhesive tape 2 shrinks in the longitudinal direction, the effect of that is small, and separation of the adhesive tape 2 in the vicinity of the release layer 3 is suppressed. As a result, the occurrence of wrinkles is suppressed. The tip adhering portion 10 only needs to be present during the annealing, and therefore the tip adhering portion 10 may be provided in a manner in which it can be peeled off after the annealing so that the user can easily peel the adhesive tape 2. That is, in the roll according to the present invention, if the release layer is provided on the side opposite to the direction in which the adhesive tape is pulled, starting from a position a predetermined distance away from a tip in the longitudinal direction of the adhesive tape, the tip in the longitudinal direction of the adhesive tape may be separated from the roll. It is noted that in Figs. 1(a), 1(b), and 1(d), and Figs. 2(a) and 2(b), the release layer 3 is illustrated in an easy-to-understand manner, but as shown in Fig. 1(c) and Fig. 2(c), the release layer 3 is actually provided on the adhesive layer 6 on the inner side from the adhesive layer 6, and thus cannot be seen from the surface side of the roll 1. The present invention will now be described in more detail below, but the present invention is not limited thereto.

### (Adhesive tape)

The adhesive tape constituting the roll according to the present invention includes a base material layer and an adhesive layer provided on the base material layer. For example, as shown in Fig. 2(c), the adhesive tape 2 can have a base material layer 5 and an adhesive layer 6 laminated on the base material layer 5. The adhesive tape may have other layers besides the base material layer and the adhesive layer. For example, an undercoat layer including an undercoating agent may be provided between the base material layer and the adhesive layer. The thickness of the entire adhesive tape is preferably from 0.04 to 1.11 mm, and more preferably from 0.06 to 0.45 mm.

### <Base material layer>

In the roll according to the present invention, the base material layer contains a polyvinyl chloride-based resin and plasticizer as main components. The polyvinyl chloride-based resin is a base resin that can impart insulation properties, flame retardancy, and strength to the base material layer. The plasticizer imparts flexibility to the base material. A base material layer containing a polyvinyl chloride-based resin and a plasticizer tends to shrink when heated, but as described above, the structure of the roll according to the present invention suppresses the occurrence of wrinkles even when annealing is performed. A base material layer containing cellophane, polypropylene, or the like as a main component does not shrink due to heating. The base material layer of the roll according to the invention may contain other components besides the polyvinyl chloride-based resin and the plasticizer. However, the total content of the polyvinyl chloride-based resin and the plasticizer in the base material layer is preferably 80% by mass or more.

Examples of the polyvinyl chloride-based resin include a polyvinyl chloride resin, a polyvinyl chloride/vinyl acetate copolymer, a polyvinyl chloride/chlorinated polyethylene resin, a polyvinyl chloride/MBS (methyl methacrylate/butadiene/styrene) resin, a polyvinyl chloride/NBR (nitrile rubber/acrylonitrile-butadiene copolymer) resin, and the like. These polyvinyl chloride-based resins may be used alone or in combination of two or more. The content of the polyvinyl chloride-based resin in the base material layer is preferably from 44 to 75% by mass, and more preferably from 50 to 70% by mass.

Examples of the plasticizer include a trimellitic acid ester plasticizer, a phthalic acid ester, a polyester plasticizer, an epoxy plasticizer, and the like. Examples of the trimellitic acid ester plasticizer include trioctyl trimellitate (TOTM), tri-normal-octyl trimellitate (TnOTM), and the like. Examples of the phthalic acid ester include dioctyl phthalate (DOP), diisononyl phthalate (DINP), diisodecyl phthalate (DIDP), diundecyl phthalate (DUP), and the like. Examples of the polyester plasticizer include an adipic acid polyester and the like. Examples of the epoxy plasticizer include epoxidized soybean oil, epoxidized linseed oil, and the like. These plasticizers may be used alone or in combination of two or more. The content of the plasticizer in the base material layer is preferably from 25 to 36% by mass, and more preferably from 28 to 33% by mass.

The base material layer may further contain a filler, a stabilizer, a lubricant, a modifier, a pigment, an anti-aging agent, and the like. Examples of the filler include an inorganic filler, such as calcium carbonate, talc, silica, calcined clay, aluminum hydroxide, magnesium hydroxide, potassium hydroxide, barium hydroxide, triphenyl phosphate, ammonium polyphosphate, polyphosphoric acid amide, zirconium oxide, magnesium oxide, zinc oxide, titanium oxide, molybdenum oxide, guanidine phosphate, hydrotalcite, snaketite, zinc borate, anhydrous zinc borate, zinc metaborate, barium metaborate, antimony oxide, antimony pentoxide, red phosphorus, alumina, boehmite, bentonite, sodium silicate, calcium silicate, magnesium carbonate and the like. Examples of the stabilizer include a fatty acid zinc, a calcium-manganese-zinc composite stabilizer, and the like. Examples of the lubricant include a fatty acid such as stearic acid and a fatty acid ester such as ester wax. Examples of the modifier include phosphite, an organic phosphite ester, a thermoplastic polyurethane, a polyester thermoplastic elastomer, and the like. Examples of the pigment include carbon black, titanium oxide, titanium dioxide, and the like. Examples of the anti-aging agent include an amine anti-aging agent, a phenolic anti-aging agent, and the like. These may be used alone or in combination of two or more.

The thickness of the base material layer varies depending on the intended use, application, and the like, but from the viewpoint of ease of winding around an electric wire, the thickness is preferably from 0.03 to 1 mm, and more preferably from 0.05 to 0.4 mm.

### <Adhesive layer>

The adhesive layer in the roll according to the present invention is not particularly limited as long as it has adhesive properties, but the adhesive layer can include an adhesive. The adhesive can include, for example, an elastomer and a tackifying resin.

Examples of the elastomer include natural rubber and synthetic rubbers such as a graft polymer obtained by graft-copolymerizing methyl methacrylate (MMA) to natural rubber, styrene-butadiene rubber (SBR), acrylonitrile-butadiene rubber (NBR), methyl methacrylate-butadiene rubber (MBR), and acrylic rubber. These elastomers may be used alone or in combination of two or more.

Examples of resins that can be used as the tackifying resin include a rosin resin, a terpene resin, an aliphatic petroleum resin, an aromatic petroleum resin, an alicyclic petroleum resin, a chromane resin, a styrene resin, a phenolic resin, a xylene resin, and the like. These tackifying resins may be used alone or in combination of two or more.

The adhesive layer may further contain a stabilizer, an antioxidant, a lubricant, a flame retardant, a filler, a plasticizer, a modifier, a pigment, and the like.

From the viewpoint of suppressing the protruding phenomenon, the thickness of the adhesive layer is preferably from 10 to 100 µm, and more preferably from 15 to 40 µm.

### <Undercoat layer>

From the viewpoint of improving the adhesion between the base material layer and the adhesive layer, the adhesive tape in the roll according to the present invention may be provided with an undercoat layer containing an undercoating agent between the base material layer and the adhesive layer. Examples of the undercoating agent include a graft polymer obtained by graft-polymerizing methyl methacrylate to natural rubber, an acrylonitrile-butadiene copolymer, and the like. These may be used alone, or preferably in combination of two or more. The thickness of the undercoat layer is not particularly limited, but can be, for example, from 0.1 to 1 µm.

### (Release layer)

In the roll according to the present invention, the release layer is laminated on the adhesive layer on the side opposite to the direction in which the adhesive tape is pulled, starting from a position a predetermined distance (w₁) away from a tip in the longitudinal direction of the adhesive tape. The release layer is adhered to the adhesive layer, but not to the roll.

The predetermined distance (w₁) is not particularly limited, but it is preferably from 1 to 5 mm, and more preferably from 2 to 4 mm. By setting w₁ to 1 mm or more, the tip in the longitudinal direction of the adhesive tape can be sufficiently adhered to the roll, and the occurrence of wrinkles can be further suppressed even when the roll is annealed. Further, by setting w₁ to 5 mm or less, the width of the tip adhering portion is narrower, and therefore the tip adhering portion can be more easily separated after annealing.

The release layer has a length (w₂) in the longitudinal direction of the adhesive tape of preferably from 5 to 20 mm, and more preferably from 8 to 12 mm. By setting w₂ to 5 mm or more, the tip adhering portion can be more easily separated after annealing. Further, by setting w₂ to 20 mm or less, the occurrence of wrinkles due to annealing can be further suppressed. The length of the release layer in the lateral direction of the adhesive tape can be the same as the length of the adhesive tape in the lateral direction, as shown in Figs. 2(a) and 2(b), for example. That is, the release layer can be laminated over the entire adhesive tape in the lateral direction.

The release layer is not particularly limited as long as it can adhere to the adhesive layer and does not adhere to the opposing base material layer. However, the release layer preferably has a tensile modulus of from 10 to 300 MPa. By setting the tensile modulus of the release layer to 10 MPa or more, deformation due to heat shrinkage as a result of annealing is less likely to occur, and the occurrence of wrinkles can be further suppressed. In addition, by setting the tensile modulus of the release layer to 300 MPa or less, the occurrence of wrinkles is further suppressed because there is a smaller difference in flexibility between the release layer and the base material layer, and the release layer appropriately follows the adhesive tape of the release layer even if the adhesive tape shrinks due to annealing. The tensile modulus of the release layer is more preferably from 50 to 280 MPa, and further preferably from 100 to 250 MPa. In the present invention, the tensile modulus is a value measured according to JIS C 2107 and ISO 527-3, and specifically is a value measured by the method described later.

The material of the release layer is not particularly limited as long as it can adhere to the adhesive layer and does not adhere to the roll (that is, the opposing base material layer). For example, the release layer material can be release paper (peel paper), a release film, or the like. However, as described above, as the release layer material, it is preferable to select a material such that the release layer has a tensile modulus of 10 to 300 MPa. Examples of such materials include soft polyvinyl chloride film, Japanese paper, non-woven fabric, and the like. These materials may be used alone or in combination of two or more.

The thickness of the release layer is preferably from 50 to 130 µm, and more preferably from 70 to 110 µm. By setting the thickness to 50 µm or more, wrinkles are less likely to occur when sticking the release layer. In addition, by setting the thickness to 130 µm or less, a difference in level between the release layer and the base material layer can be suppressed to ensure an adhering area of w₁, and the occurrence of wrinkles due to annealing can be suppressed.

### (Roll)

The length of the roll according to the present invention in the longitudinal direction of the adhesive tape is not particularly limited, but can be, for example, from 5 to 40 m. The length of the roll in the lateral direction of the adhesive tape (the thickness of the roll) is not particularly limited, but can be, for example, from 100 to 3000 mm. The diameter of the roll is not particularly limited, but it can be, for example, from 39 to 100 mm. The roll may have a core in the center as shown in Figs. 2(a) and 2(b), or may not have a core.

In the roll according to the present invention, the superposed adhesive strength of the adhesive tape at 120°C (hereinafter, also referred to as high-temperature superposed adhesive strength) is preferably from 0.5 to 2.5 N/cm. By setting the high-temperature superposed adhesive strength to 0.5 N/cm or more, displacement and separation of the adhesive tape during annealing are further suppressed. In addition, by setting the high-temperature superposed adhesive strength to 2.5 N/cm or less, the tip adhering portion can be more easily separated after annealing. The high-temperature superposed adhesive strength is more preferably from 0.6 to 2.2 N/cm, and further preferably from 0.7 to 1.9 N/cm. The high-temperature superposed adhesive strength is specifically a value measured by the method described later.

### [Method for manufacturing adhesive tape roll]

The method for manufacturing the adhesive tape roll according to the present invention includes the following steps: a step of forming the roll by winding an adhesive tape including a base material layer containing a polyvinyl chloride-based resin and a plasticizer, and an adhesive layer provided on the base material layer, with the adhesive layer facing inward in the longitudinal direction of the adhesive tape (hereinafter, also referred to as "roll forming step"); a step of laminating, starting from a position a predetermined distance away from a tip in the longitudinal direction of the adhesive tape, a release layer on the adhesive layer on a side opposite to the tip (hereinafter, also referred to as "release layer lamination step"); and a step of heating the roll at from 100 to 130°C (hereinafter, also referred to as "annealing step"). According to this manufacturing method, the adhesive tape according to the present invention can be easily manufactured. An example of the manufacturing method according to the present invention will be described below with reference to the drawings, but the manufacturing method according to the present invention is not limited to that example.

### (Roll forming step)

In this step, first, an adhesive tape including a base material layer containing a polyvinyl chloride-based resin and a plasticizer and an adhesive layer provided on the base material layer can be prepared. The materials and thicknesses of the base material layer and adhesive layer may be the same as those of the adhesive tape roll according to the present invention described above. The adhesive layer can be formed on the base material layer by a known method. For example, the adhesive layer can be formed by coating an adhesive on the base material layer and drying. From a productivity viewpoint, it is preferred that the length of the adhesive tape to be prepared in the lateral direction is sufficiently longer than the length of the adhesive tape of the roll to be manufactured in the lateral direction. By setting the length of the adhesive tape in the lateral direction to be sufficiently long, winding, release layer lamination, and annealing can be performed all at once. This is because a plurality of rolls can be manufactured at once by cutting the wide roll to the desired width at the end of the manufacturing process.

Next, the adhesive tape is wound with the adhesive layer facing inward in the longitudinal direction to form a roll. For example, as shown in Fig. 3(a), the adhesive tape 2 can be wound onto a cylindrical core 8. The adhesive tape 2 shown in Fig. 3(a) has a sufficiently long length in the lateral direction to enable a wide roll to be obtained. As will be described later, in this step, the adhesive tape may be wound while leaving only the tip portion in the longitudinal direction.

### (Release layer lamination step)

In this step, in the roll, starting from a position a predetermined distance away from the tip in the longitudinal direction of the adhesive tape, the release layer is laminated on the adhesive layer on the side opposite to the tip. The material and thickness of the release layer may be the same as that of the adhesive tape roll according to the present invention described above. The release layer is laminated on the side opposite to the tip, starting from a position a predetermined distance (w₁) away from the tip in the longitudinal direction of the adhesive tape. That is, the release layer is laminated from a position a predetermined distance (w₁) away from the tip in the longitudinal direction of the adhesive tape toward the side opposite to the direction in which the adhesive tape is pulled. The predetermined distance (w₁) is not particularly limited, but it is preferably from 1 to 5 mm, and more preferably from 2 to 4 mm. The length (w₂) of the release layer in the longitudinal direction of the adhesive tape is preferably from 5 to 20 mm, and more preferably from 8 to 12 mm. Further, the release layer can be laminated over the entire adhesive tape in the lateral direction. The method for manufacturing the adhesive tape roll according to the present invention also includes a method in which, in the roll forming step, the adhesive tape is wound while leaving only the tip portion in the longitudinal direction, the release layer is laminated on the tip portion in the same manner as in this step, and then the adhesive tape is wound up to the tip portion.

### (Annealing step)

In this step, the obtained roll including the release layer is annealed at from 100 to 130°C. By heating the roll to 100°C or higher, residual stress in the adhesive tape can be sufficiently reduced, and migration of the plasticizer from the base material layer to the adhesive layer is brought into equilibrium, thereby enabling adhesive strength to be increased and the protruding phenomenon to be suppressed. Further, by heating the roll at 130°C or lower, thermal deterioration of the adhesive tape can be prevented. The heating temperature is preferably from 110 to 120°C. The heating time depends on the heating temperature, but is preferably from 30 to 180 minutes, and more preferably from 60 to 120 minutes. In this step, although shrinkage occurs in the longitudinal direction of the adhesive tape due to the heating, the presence of the tip adhering portion minimizes the effect of the shrinkage, and as a result, the occurrence of wrinkles in the vicinity of the release layer is suppressed.

When a wide roll as shown in Fig. 3(a) has been manufactured, the roll 1 can be cut to a desired width after annealing using a cutter 9, for example, as shown in Fig. 3(b). Further, from the viewpoint of user convenience, the tip adhering portion may be separated after the annealing.

### EXAMPLES

### [Example 1]

100 parts by mass of a polyvinyl chloride resin (TH-1300, average polymerization degree 1300, manufactured by Taiyo Vinyl Corporation), 56 parts by mass of tri-2-ethylhexyl trimellitate (TOTM, manufactured by DIC Corporation) as a plasticizer, and 11 parts by mass of antimony trioxide (Fire Cut TOP-5, manufactured by Suzuhiro Chemical Co., Ltd.) were melt-kneaded in a Banbury mixer so as to be uniformly dispersed, and then molded at a roll temperature of 165°C with a calender molding machine to produce a base material having a thickness of 100 µm.

100 parts by mass of a polyvinyl chloride resin (TH-1000, average polymerization degree 1000, manufactured by Taiyo Vinyl Corporation) and 25 parts by mass of diisononyl phthalate (DINP, manufactured by J-Plus Co., Ltd.) were melt-kneaded in a Banbury mixer so as to be uniformly dispersed, and then molded at a roll temperature of 165°C with a calender molding machine to produce a film having a thickness of 100 µm. The obtained film was cut to a width of 10 mm with a log cutting machine to produce a release layer.

A mixed emulsion (KT4612A, manufactured by E-Tec Co., Ltd.) of a graft polymer latex obtained by graft-polymerizing methyl methacrylate to natural rubber and an acrylonitrile-butadiene copolymer emulsion was coated as an undercoating agent on one side of the produced base material by a gravure method, and then dried to form an undercoat layer. Then, an adhesive layer was formed on the undercoat layer by coating, as an adhesive, an adhesive containing 60 parts by mass (solid content) of natural rubber latex (HA LATEX, manufactured by Resitex Ltd.), 40 parts by mass (solid content) of a graft polymer latex (MG-40S, manufactured by Resitex Ltd.) obtained by graft-polymerizing methyl methacrylate to natural rubber, and 135 parts by mass (solid content) of a petroleum resin emulsion tackifier (AP-1100-NT, manufactured by Arakawa Chemical Industries, Ltd.) by a comma method, which was then dried to obtain an adhesive tape. The obtained adhesive tape is wound into a tape log shape as shown in Fig. 2(a), the release layer was bonded to the side opposite to the direction in which the adhesive tape is pulled, starting from a position 3 mm away from the tip in the longitudinal direction of the adhesive tape, and an annealing treatment was carried out at 120°C for 120 minutes to obtain an adhesive tape roll. The roll was evaluated for tensile modulus of the release layer, high-temperature superposed adhesive strength, protrusion on the inner side of the roll over time, presence or absence of wrinkles, and ease of separation of the end portion according to the following procedures. The results are shown in Table 1.

### <Tensile modulus of release layer>

In accordance with JIS C 2107, a test piece having a width of 10 mm and a length of 200 mm was cut from the release layer. Both ends of the test piece were clamped and fixed by the test-piece chuck portions of a tensile tester so that the distance between the chucks was 100 mm. The elongation and load were measured by pulling the test piece at a test speed of 300 mm/min at a temperature of 23°C and humidity of 50% RH. In accordance with ISO 527-3, the slope of the stress-strain curve at strains of from 0.0005 to 0.0025 was calculated to obtain the tensile modulus.

### <High-temperature superposed adhesive strength>

Two test pieces having a width of 10 mm and a length of 150 mm were cut from the adhesive tape separated from the roll. The adhesive surface (adhesive layer) of one of the test pieces was bonded to the back surface (base material layer) of the other test piece so that the overlap was 10 mm wide and 20 mm long, and the superposed test pieces were pressed together with a pressing roller having a mass of 2 kg at a speed of 10 mm/min. Both ends of the test pieces were clamped and fixed by the test-piece chuck portions of a tensile tester having a constant temperature bath so that the distance between the chucks was 100 mm, the test pieces were allowed to stand for 5 minutes at a temperature of 120°C, and then the load was measured by pulling the test pieces at a test speed of 300 mm/min.

### <Evaluation of protrusion on inner side of roll over time>

After allowing an annealed roll to stand at room temperature for 2 days, the distance the adhesive tape on the inner side of the roll protruded outward was measured.

### <Evaluation of presence or absence of wrinkles>

The surface of an annealed roll was observed, and the presence or absence of wrinkles was visually confirmed.

### (Evaluation criteria)

A: No wrinkles at all.
B: A few wrinkles seen near the terminal.
C: Wrinkles are seen over a wide area.

### <Evaluation of ease of separating the end portion>

A roll was cut to a width of 19 mm, and the working time required by each of five workers to separate the terminal for pulling the adhesive tape from the roll was measured. It is noted that the five workers were well trained in separating the terminal for pulling the adhesive tape from the roll, and it was confirmed that there was no variation in the evaluation.

### (Evaluation criteria)

A: All 5 workers could separate the end portion within 1 second.
B: At least 3 out of the 5 workers could separate the end portion within 1 second.
C: At least 3 out of the 5 workers could not separate the end portion within 1 second.

### [Examples 2 to 9 and Comparative Example 1]

Adhesive tape rolls were manufactured by the same method as in Example 1, except that the spaced-apart distance w₁ from the tip, the length w₂ of the release layer, the added amounts of the polyvinyl chloride resin (PVC) and plasticizer, and the thickness of the adhesive layer were as shown in Table 1. In addition, the roll of each example was evaluated in the same manner as in Example 1 for the tensile modulus of the release layer, high-temperature superposed adhesive strength, protrusion on the inner side of the roll over time, presence or absence of wrinkles, and ease of separating the end portion. The results are shown in Table 1.

**[Table 1]**

| | | | | | Example 1 | Example 2 | Example 3 | Example 4 | Example 5 | Example 6 | Example 7 | Example 8 | Example 9 | Comparative Example 1 |
|---|---|---|---|---|---|---|---|---|---|---|---|---|---|---|
| Structure | Base material layer | Type | | - | PVC | PVC | PVC | PVC | PVC | PVC | PVC | PVC | PVC | PVC |
| | | Thickness | | µm | 100 | 100 | 100 | 100 | 100 | 100 | 100 | 100 | 100 | 100 |
| | Adhesive layer | Thickness | | µm | 20 | 20 | 20 | 20 | 20 | 20 | 20 | 8 | 40 | 20 |
| | Release layer | Type | | - | PVC | PVC | PVC | PVC | PVC | PVC | PVC | PVC | PVC | PVC |
| | | Blend | PVC | parts by mass | 100 | 100 | 100 | 100 | 100 | 100 | 100 | 100 | 100 | 100 |
| | | | Plasticizer | parts by mass | 25 | 25 | 25 | 25 | 25 | 85 | 17 | 25 | 25 | 25 |
| | | Thickness | | µm | 100 | 100 | 100 | 100 | 100 | 100 | 100 | 100 | 100 | 100 |
| | | Distance w1 | | mm | 3 | 0.7 | 6 | 3 | 3 | 3 | 3 | 3 | 3 | 0 |
| | | Length w2 | | mm | 10 | 10 | 10 | 3 | 25 | 10 | 10 | 10 | 10 | 10 |
| Physical properties | Tensile modulus of release layer | | | MPa | 214 | 214 | 214 | 214 | 214 | 5 | 400 | 214 | 214 | 214 |
| | High-temperature superposed adhesive strength | | | N/cm | 1.3 | 1.3 | 1.3 | 1.3 | 1.3 | 1.3 | 1.3 | 0.3 | 3.0 | 1.3 |
| Evaluation results | Protrusion on inner side of roll outward over time | | | mm | <0.1 | <0.1 | <0.1 | <0.1 | <0.1 | <0.1 | <0.1 | <0.1 | <0.1 | <0.1 |
| | Presence/absence of wrinkles | | | | A | B | A | A | B | B | B | B | A | C |
| | Ease of tip separation | | | | A | A | B | B | A | A | A | A | B | A |

As shown in Table 1, in the adhesive tape rolls of Examples 1 to 9 that satisfy the configuration of the present invention, the phenomenon of the adhesive tape on the inner side of the roll protruding outward over time was suppressed, wrinkles after annealing were suppressed, and the ease of separation of the end portion for pulling the adhesive tape was also good. On the other hand, in the adhesive tape roll of Comparative Example 1, in which the release layer was not spaced apart from the adhesive tape terminal by a predetermined distance, although the protruding phenomenon was suppressed and the ease of separation of the end portion was good, wrinkles were observed over a wide area. From the above results, it was confirmed that the adhesive tape roll according to the present invention suppresses the phenomenon of the adhesive tape on the inner side of the roll protruding outward over time, suppresses wrinkles after annealing, and had good ease of separation of the end portion for pulling the adhesive tape.

### REFERENCE SIGNS LIST

- 1: roll
- 2: adhesive tape
- 3: release layer
- 4: tip
- 5: base material layer
- 6: adhesive layer
- 7: wrinkle
- 8: core
- 9: cutter
- 10: tip adhering portion

## Claims

1. An adhesive tape roll formed by winding an adhesive tape comprising a base material layer containing a polyvinyl chloride-based resin and a plasticizer, and an adhesive layer provided on the base material layer, with the adhesive layer facing inward in the longitudinal direction, wherein
a release layer is laminated on the adhesive layer on a side opposite to the direction in which the adhesive tape is pulled, starting from a position a predetermined distance away from a tip in the longitudinal direction of the adhesive tape.

2. The adhesive tape roll according to claim 1, wherein the release layer is laminated starting from a position 1 to 5 mm away from the tip in the longitudinal direction of the adhesive tape.

3. The adhesive tape roll according to claim 1 or 2, wherein a length of the release layer in the longitudinal direction of the adhesive tape is from 5 to 20 mm.

4. The adhesive tape roll according to any one of claims 1 to 3, wherein the release layer has a tensile modulus of from 10 to 300 MPa.

5. The adhesive tape roll according to any one of claims 1 to 4, wherein the adhesive tape has a superposed adhesive strength of from 0.5 to 2.5 N/cm at 120°C.

6. A method for manufacturing an adhesive tape roll comprising:
a step of forming the roll by winding an adhesive tape comprising a base material layer containing a polyvinyl chloride-based resin and a plasticizer, and an adhesive layer provided on the base material layer, with the adhesive layer facing inward in the longitudinal direction of the adhesive tape;
a step of laminating, starting from a position a predetermined distance away from a tip in the longitudinal direction of the adhesive tape, a release layer on the adhesive layer on a side opposite to the tip; and
a step of heating the roll at from 100 to 130°C.
